Europäisches Patentamt

European Patent Office

Office européen des brevets

(11) Publication number: **0 491 350 A2**

# EUROPEAN PATENT APPLICATION

(21) Application number: **91121587.9**

(22) Date of filing: **17.12.91**

(51) Int. Cl.5: **G11B 5/02, G11B 20/10**

(30) Priority: **18.12.90 US 629755**

(43) Date of publication of application:
**24.06.92 Bulletin 92/26**

(84) Designated Contracting States:
**DE FR GB IT**

(71) Applicant: **Hewlett-Packard Company**
**3000 Hanover Street**
**Palo Alto, California 94304(US)**

(72) Inventor: **Hanks, D. Mitchel**
**7109 Folk Drive**
**Boise, Idaho 83704(US)**
Inventor: **Barnes, Ted W.**
**2707 Rolling Hills Drive**
**Star, Idaho 83669(US)**

(74) Representative: **Baillie, Iain Cameron et al**
**c/o Ladas & Parry, Altheimer Eck 2**
**W-8000 München 2(DE)**

(54) Apparatus and method for transducer crosstalk cancellation in a disk drive system.

(57) In a dedicated servo type of disk drive (1), the effect of coupling of the electromagnetic field from a data head (5) to a servo head (7), in a data writing, track-following mode of operation, is eliminated by subtracting (12) the write signal component from the signal produced by the servo head (7).

FIG.1

EP 0 491 350 A2

## Technical Field

This invention relates generally to disk memory drives and more particularly to a dedicated servo type of disk drive in which the effect of crosstalk from a data electromagnetic head to a servo electromagnetic head on opposite surfaces of a memory disk, during data recording, is eliminated by canceling the crosstalk signal component from the electrical output signal of the servo electromagnetic head.

## Background of the Invention

With increasing data density recording requirements in disk drives, efforts are being made to achieve smoother disk surfaces so that the flying heights of the electromagnetic heads may be reduced. Reduction in head flying height reduces the spread of the electromagnetic recording field during a recording operation. This lower flying height reduces the size of the recorded data bits and also increases the resolution in the readback mode, which makes it possible to increase the recording density. One way to achieve smoother disk surfaces is to employ glass or ceramic substrates, but these being non-metallic do not provide the degree of shielding for the electromagnetic fields between heads aligned on the same track cylinder, on opposite faces of a disk, as do the conventional aluminum disks.

Other efforts to increase data storage employing aluminum disks, without increasing the size of the disk drive, include reducing the thickness of the disks to permit adding one or more disks in a given volume. Reducing the thickness of a disk, however, reduces the shielding effect which also introduces crosstalk problems.

Data head and servo head as used hereinafter will be understood to mean data electromagnetic head and servo electromagnetic head, respectively.

In a dedicated servo disk drive having a dedicated servo disk, in practice, the data head is usually positioned adjacent the top surface of the dedicated servo disk and is aligned with the servo head on the bottom face of the disk. The close proximity of the data head to the servo head requires expensive shielding, where ceramic disks or very thin aluminum disks are used, to prevent crosstalk during data writing, i.e., linking of the coil or winding of the servo head by the electromagnetic field of the data head. In the absence of shielding, during writing of data, signals are induced in the servo head which are not solely the result of the sensed servo code but have additional data signal components due to the crosstalk of the data signal electromagnetic field to the servo head or other external disturbances (from the motor, for example). These signals degrade the track following performance of the disk drive. Another approach to avoiding crosstalk has been to eliminate the use of the disk surface opposite the servo code surface for data recording. This is undesirable since it reduces data storage.

Rather than minimizing crosstalk by shielding or reducing crosstalk by not using one face of the dedicated servo disk, the present invention provides an arrangement in which crosstalk is permitted and the crosstalk signal component of the servo head signal is cancelled in circuits external to the servo head.

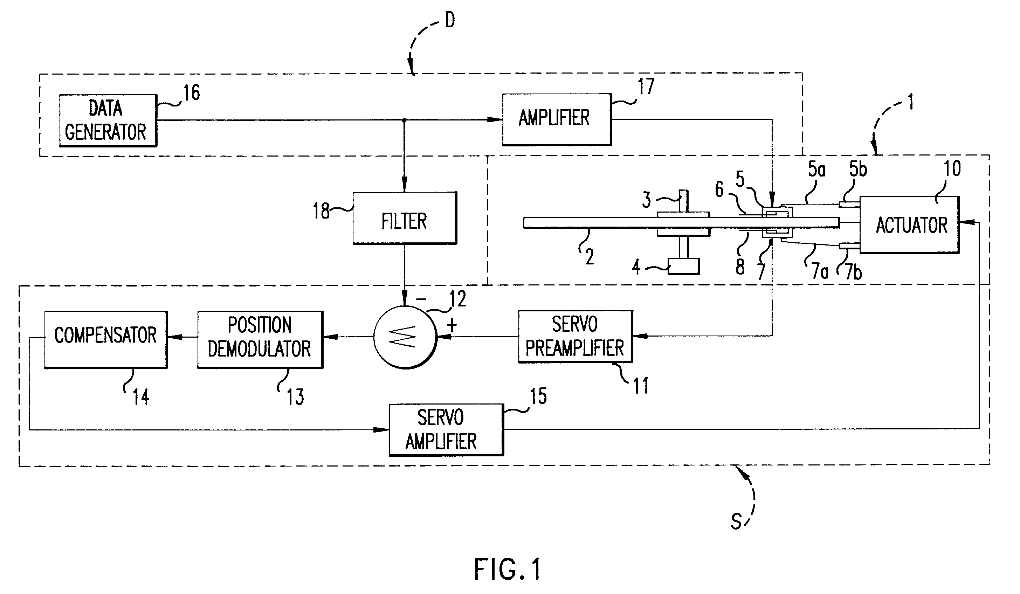

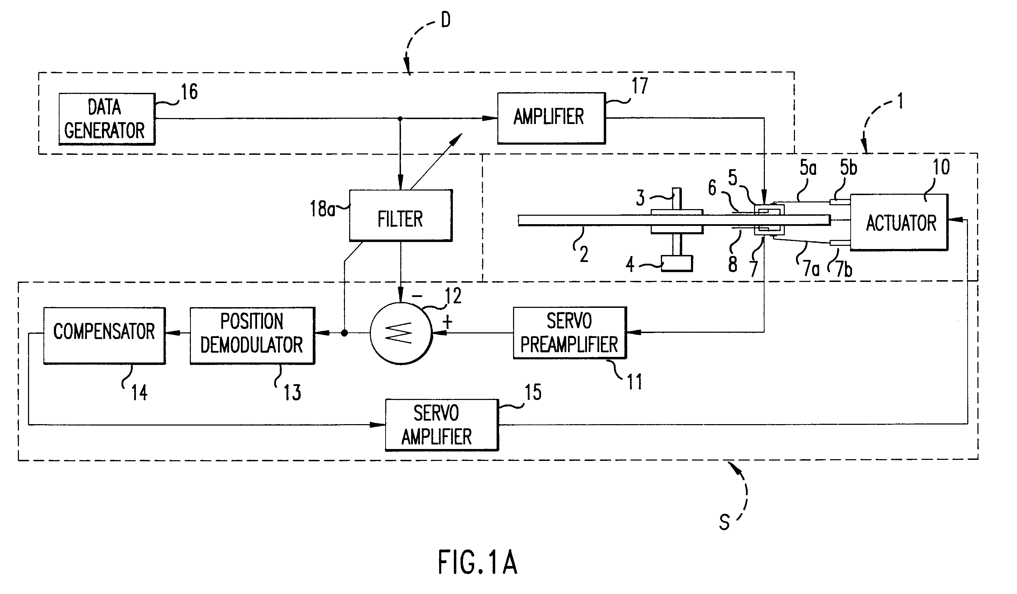

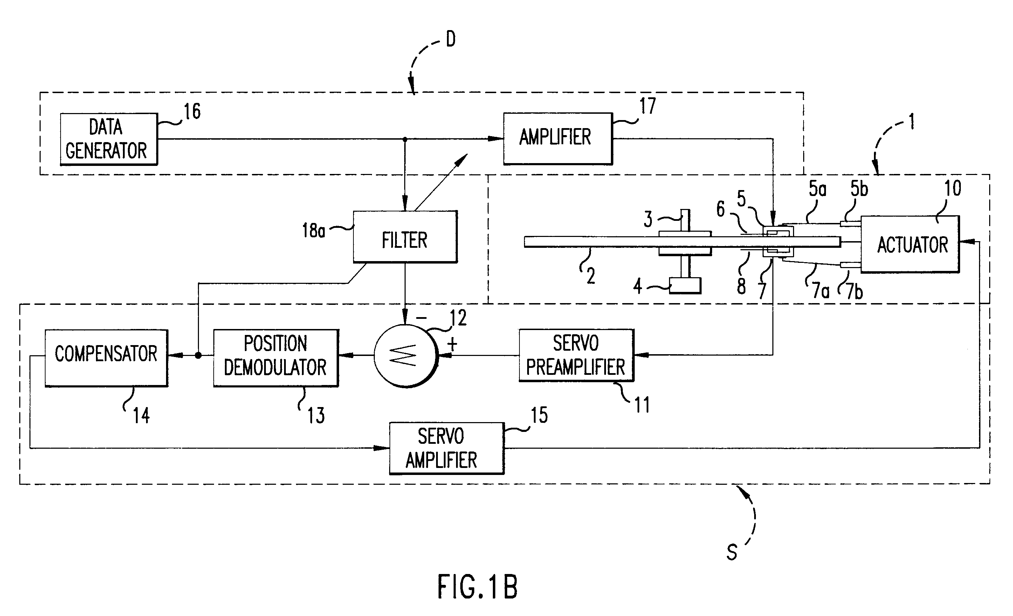

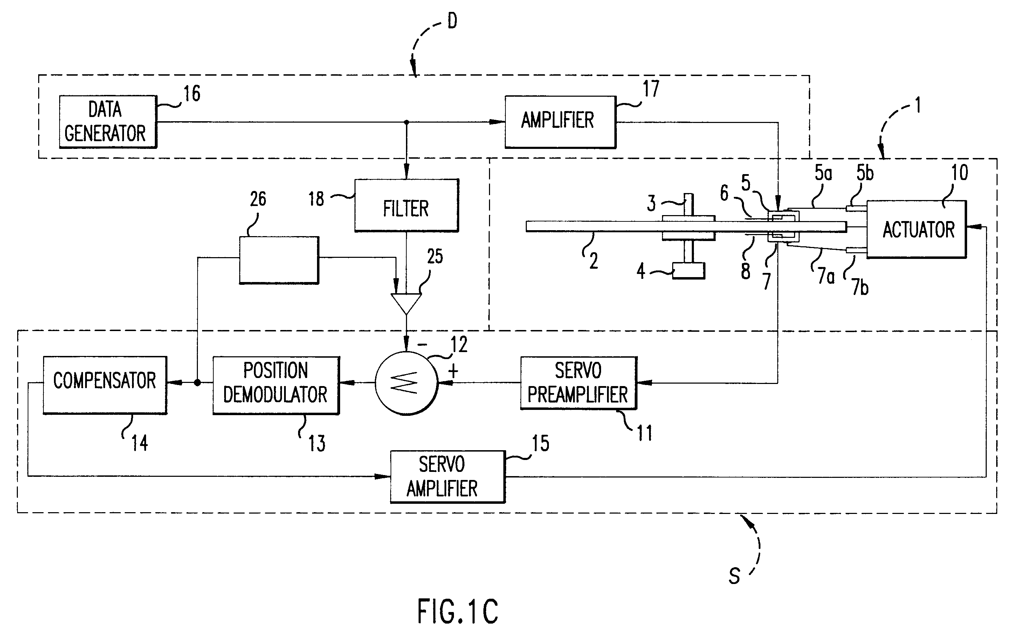

Signal correction, that is, the elimination of unwanted signal components from signals to be processed, by the technique of signal cancellation, is well known. This technique is useful in noise cancellation, for example. Examples of noise cancellation are discussed in a paper by Bernard Widrow, et al, entitled Adaptive Noise Canceling: Principles And Applications, Proceedings of the IEEE, Vol. 63, No. 12, December 1975, which focuses on the specific case of adoptive noise cancellation. Points of interest in that paper include reference to Figs. 1, 2 and 3 and the text relating thereto which cover schematic diagrams of circuits representing adaptive noise cancellation concepts, their function and analysis; reference to the applications of the noise canceling techniques in electrocardiography, to fetal electro-cardiography, to the derivation and processing of ECG signals in a heart transplant patient, and to the canceling of noise in speech signals. Adaptive filters which are discussed in appendix A are also of interest.

## Summary of the Invention

During data recording in a disk drive, the servo system is operating in the track-following mode. The undesirable effects of crosstalk from the data head to the servo head are substantially eliminated, according to this invention, by utilizing the data signals, which are coupled to the data head for data track recording, to produce correction signals which are subtractively or differentially combined with the signals produced by the servo head, to cancel the crosstalk or write signal component therefrom, ideally leaving signals resulting only from sensing of the servo code by the servo head. The resulting signals, called control signals herein, are used for head positioning. Normal track following is thereby achieved without the need for expensive shielding, or without the need for eliminating the use of one surface of the dedicated servo disk for the purpose of data storage.

## Brief Description of the Drawings

This invention will be better understood by reference to the following specification when considered in conjunction with the accompanying drawings in which:

Fig. 1 is a block diagram of a disk drive system embodying the principle of this invention, for minimizing crosstalk from a data head to an adjacent servo head during the recording of data on one surface of a memory disk.

Fig. 1A, 1B and 1C illustrate modifications of the disk drive system of Fig. 1.

Fig. 2 depicts a typical interference signal.

Fig. 3, at a reduced time scale from that of Fig. 2, depicts a signal induced in a servo head due to an interference signal of the type of Fig. 2, in relation to a signal simulating a signal derived from the recording signal of Fig. 2, and

Fig. 4, at the same scale as Fig. 3, depicts the sum of the signals of Fig. 3, in which the crosstalk, i.e., the interfering signal from the data head, has been substantially cancelled.

Detailed Description of the Preferred Embodiment

This invention allows the dedicated servo system for a disk drive to accurately position the servo head and the data heads in the presence of crosstalk. This crosstalk results when the data head writes data on the disk. During data recording, the system is operating in a track-following mode. The writing current in the coil or winding of the data head creates an electromagnetic field that couples the coil or winding of the dedicated servo head. Such interference is normally not present or is minimized by the shielding effect of the disk, which in most cases comprises an aluminum substrate. In severe cases, however, additional shielding of electromagnetic fields may be required. Shielding, however, is costly and complex and, in some cases is not a satisfactory solution to this problem. Rather than attempting to shield a crosstalk signal, this invention adds an equal and opposite correction signal to cancel the undesirable crosstalk interference signal component of the signal produced by the servo head to produce a control signal used for head positioning.

The apparatus for and method whereby this signal cancellation is accomplished appears in the embodiment of this invention which is illustrated in the disclosure which follows, beginning with the block diagram of Fig. 1. Here, a disk drive, generally designated 1, is illustrated only to the extent necessary to understand the principles of this invention. In this illustration, the disk drive 1 comprises a memory disk 2 which is rotatably mounted by spindle 3. The spindle 3 and disk 2 are driven by a motor 4 at a selected speed. The memory disk 2 is the dedicated servo disk of the disk drive.

In practice, servo code is written in tracks on one surface of the disk 2 and the other surface of the disk 2 is used for recording data. By way of illustration, a data head 5 comprising a coil 6 is disposed in a position adjacent the upper surface of the disk 2. A servo head 7, comprising a coil 8, is disposed in a position adjacent the bottom surface of the disk 2. These heads are vertically aligned, as is well known, to be centered on corresponding tracks, servo and data, for writing data or for data-reading purposes.

The heads 5 and 7 are supported in the respective positions illustrated by means of flexure assemblies 5a and 7a for the data head 5 and the servo head 7, respectively. The left ends of the flexure assemblies, as viewed, are provided with flexible gimbals (not shown in detail) represented by the curved ends which attach the data and servo heads 5 and 7 to the load beams of the flexure assemblies 5a and 7a. The right ends of the load beams of the flexure assemblies 5a and 7a, as viewed, are attached to arms 5b and 7b, respectively, which form part of an armstack of an actuator 10. The actuator 10, which may be a rotary or linear actuator, under the control of a servo system S, moves the data and servo heads 5 and 7 between selected radial positions over the surfaces of the disk 2 in a track seeking mode, and, in a track-following mode, is intended to hold the servo head 7 and, hence, also the data head 5, in track centered positions.

This invention is directed to a solution to the problem resulting from the undesirable condition where the disk 2 does not provide adequate shielding between the data head 5 and the servo head 7, so that when a data writing or recording operation is being performed by the data head 5, the electromagnetic field produced thereby links the coil 8 of the servo head 7. During a data writing operation, the servo system S functions to control the actuator 10 so that the system operates in a track-following mode. In this situation, the servo head 7 senses the magnetic field of the servo code in a track which has been selected for track following and, as is well known, produces signals which are used by the servo system S to control the actuator 10 to hold the servo head 7 at track center. For this servo system S to function properly in a track-following mode, it is essential that there be negligible interference from electromagnetic fields, other than that field of the servo code, linking the coil 8 of the servo head 7. In a data writing operation, unwanted electromagnetic fields may interfere with servo code sensing, degrading the track following function and resulting in data being written in off-track positions, possibly erasing adjacent channel data and degrading the reading of the recorded data at a later time. Any interference with the function of the servo head 7, in transducing the servo code in track following, is undesirable. Thus as the memory disks 2, if made of aluminum, are made thinner, to increase the number of disks in a given volume and, hence, increase data capacity, crosstalk interference between a data head 5 and a servo head 7 can occur in a degree that will degrade the track following function. Crosstalk interference is worse if the disk substrate is of glass, of a ceramic material, or of other substrates which provide little shielding for the electromagnetic fields.

The disk drive servo system S is illustrated only to the extent necessary to demonstrate the track-following function. To this extent, the servo head 7 is coupled to a servo preamplifier 11. The servo loop of the servo system S includes, conventionally, a position demodulator 13, a compensator 14 and a servo amplifier 15, in the sequence named. The output of the servo amplifier 15 is coupled as a control input to the actuator 10 for track following purposes.

A data writing control system D comprises a data generator 16 and a data signal amplifier 17 the output of which is connected to the coil 6 of the data head 5. Data writing is well known in the art, thus the implementation and function of the data generator 16 is understood by those skilled in the art. Ordinarily, such a data generator 16 may include a host computer, a microprocessor and a data encoder (none being shown), the latter of which encodes the data from the microprocessor and produces the data signals.

In a data writing operation, the servo head 7 must be centered over a selected track. The memory disk 2 is rotating. In this track-following mode, both the servo head 7 and the data head 5 are necessarily held in a track centered position by the function of the servo system S in controlling the actuator 10. As is well known, data is written in the selected track on the adjacent data surface of the memory disk 2.

To obviate the effect of crosstalk between the data head 5, when writing or recording data, and the servo head 7, in this track-following mode of operation, this invention, in one embodiment, subtractively combines a correction signal derived from the data signals which are transmitted to the data head 5 with the output signal of the servo preamplifier 11 derived from the servo head 7. To this end, a summing junction 12 is employed between the servo preamplifier 11 and the position demodulator 13. This summing junction 12 algebraically (differentially) combines the output signals, called correction signals, of a filter 18 with the output signals of the servo preamplifier 11. The filter 18 receives its input from the data generator 16. One type of filter which may be used in this application is a fixed Linear Time Invariant filter. The transfer characteristic of one type of filter which may be employed in this application may be expressed as a polynomial transfer function of the form: $k/(s^2 + as + b)$. The filter 18, however, is not limited to the type thus described. Other forms of polynomial transfer functions may be employed. Filter signals may be discrete or continuous. Polynomial expressions of transfer functions may comprise parametric terms in both numerators and denominators. This filter, as will be seen in Figs. 1A, 1B and 1C, can also be made to be adaptive or adjustable or programmable by adjusting one or more of its parameters as a function of the control signal or the demodulated control signal, or, stated otherwise, as a function of the difference between the signals at the output of the filter, the correction signal, and the data signal component of the signal derived from the servo head, the output of the preamplifier 11. Further, as will be explained, the compensating or correction signals and the servo head signals may be derived from and combined at locations in the system other than those illustrated.

The servo preamplifier 11 amplifies the signals produced by the servo head 7, comprising the desired servo code signals along with the undesirable crosstalk or write signal components. The filter 18 is designed so that it provides a signal which is equal to the crosstalk or write signal component in the servo head signal, to the summing junction 12. In the summing junction 12, the filter signal is subtracted from the signal from the servo preamplifier 11. Thus the output of the summing junction 12 ideally contains only the desired servo code signal.

The position demodulator 13, the compensator 14, and the servo amplifier 15, responding to the control signal from the summing junction 12, produce a track following signal for positioning the servo head 7.

Cancellation of the unwanted crosstalk or write signal component may be accomplished at other points in the system illustrated. For example, the input to the filter may be derived from the output of the amplifier 17 in a position between the amplifier 17 and the data head 5. Similarly the summing junction 12 may be positioned between the servo head 7 and the servo preamplifier 11. All that is required is a signal at the output of the filter 18 which is equal to or the same as the crosstalk or data signal component of the servo signal at the negative input terminal of the summing junction 12.

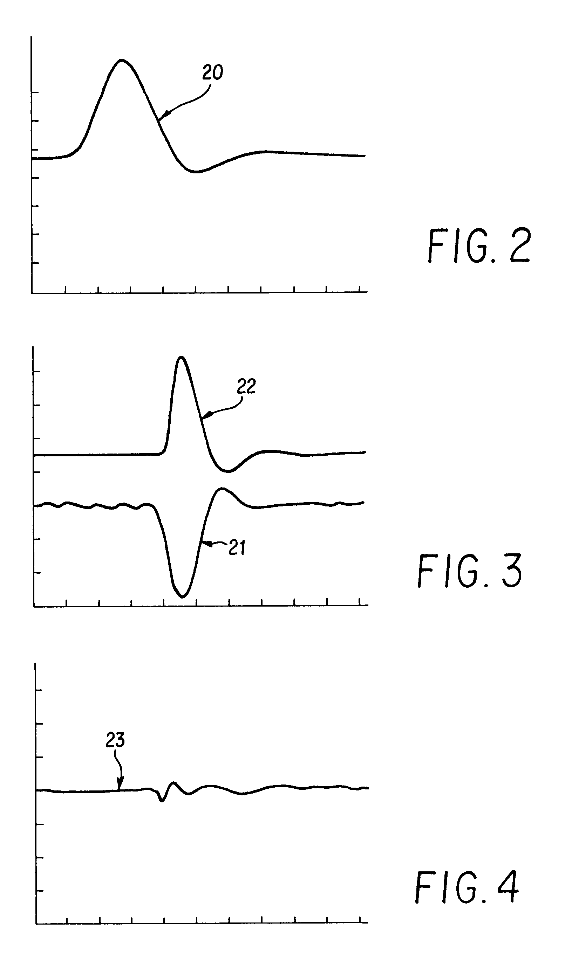

Figs. 2, 3 and 4, which are traces from an oscilloscope photograph showing measured cancellation, graphically illustrate this point. Figs. 3 and 4 are plotted at the same scale which has a reduced time scale from that of Fig. 2. Fig. 2 plots a characteristic interference canceling signal 20, derived from a data writing signal, of the type produced by the data generator 16 for example. The output of the servo preamplifier 11 is illustrated in the lower signal 21 in Fig. 3. This signal is the result only of crosstalk coupling from the data head to the servo head with the memory disk 2 stationary. Hence, the servo code signal component is not present and, as a result, the write signal component induced in the servo head 7 is plainly evident. The compensating or correction signal at the output of the filter 18, the upper signal 22 in Fig. 3, is simulated in this illustration and is tailored to the cross talk or data signal component 21 of the servo preamplifier 11 to represent a typical output of the filter 18. The algebraically summed result, by the summing junction 12, as seen in Fig. 4, is a signal 23, having only a slight ripple, with the interference substantially reduced. In practice, with the disk rotating, the remaining signal (not shown here) is the servo code signal which is the input signal to the position demodulator 13 and which is processed in the servo system S for use by the actuator 10, to hold the servo head 7 in a track centered position.

Regardless of the sources of the crosstalk or data signal component 21 and the compensating or correction signal 22, the requirement of the signals at the input of the summing junction 12 is as illustrated in Fig. 3, not that they be exactly of the shape as illustrated in Fig. 3, but, ideally, that the compensating signal 22 be an opposed image of the crosstalk or data signal component 21 of the servo head output signal in the subtractive relationship, to obtain a control signal for the servo which is derived only from the servo code.

As noted hereinabove, the filter 18 may be an adaptive, an adjustable, or a programmable filter. This is desirable since the heads 5 and 7, their flying heights, the disks with which they cooperate, gains, and other related parameters of interest are not identical. These variations can result in signal variations of the servo head 7 which are reflected in the output of the servo preamplifier 11. Similarly, filter characteristics may not be identical. Thus an adaptive filter arrangement may be desirable. Adaptive filters are well known, as seen in the referenced Widrow et al paper, supra. The polynomial expression noted hereinabove, defines a filter transfer characteristic that can be optimally tuned by adjusting the parameters "a", "b", or "k" of the filter parameters, individually or severally, according to some external condition. Commonly available adaptive filters are discrete, finite impulse response filters where the transfer function numerator terms are selectively varied and the denominator terms remain constant. Continuous response filters are also contemplated herein.

Figs. 1A and 1B illustrate differing adaptive filter connections. Referring again to the transfer characteristic defined hereinabove, assume that the coefficient "a", in the denominator is to be varied. The variation of that coefficient is accomplished by adjusting filter parameters according to some algorithm or rule applied to an additional input to the filter from some additional connection. Fig. 1A depicts adjustment of the filter parameters of an adaptive filter 18a by an adjustment connection 12a using the control signal at the output of the summing junction 12. Fig. 1B depicts the filter parameter adjustment by an adjustment connection 13a based on the output of the position demodulator 13, the demodulated control signal. Thus, variations in the output of the summing junction 12 or in the output of the position demodulator 13, which reflect variations in the parameters of interest, from one disk drive to another, which may result in suboptimal cancellation, are used advantageously to adapt the filter 18a, in the production of its crosstalk canceling signal, to tailor that signal to the requirements of the particular system. In both Figs. 1A and 1B, as was the case in Fig. 1, the principles graphically demonstrated in Figs. 2, 3 and 4, also apply.

Fig. 1C illustrates a further variation in the interference signal cancellation circuits in which a fixed filter 18 is employed in a correction circuit providing optimal RMS noise cancellation. In this embodiment, a filter amplifier 25, which is connected between the fixed filter 18 and the summing junction 12, is also controlled by the output of a microprocessor 26 which processes the servo control signal, typically from the output of the position demodulator 13.

By implementing in the processor 26 the differential steepest decent method described in part III of a second paper by Widrow et al, entitled "A Comparison of Adaptive Algorithms Based on the Methods of Steepest Decent and Random Search, IEEE Transactions on Antennas and Propogation, Vol. AP-24, No. 5, September 1976, the correlation of the transducer and correction signals can be optimized.

By this expedient the correction signal at the output of the fixed filter 18, which characterizes the data signal and, hence, characterizes the data signal crosstalk or interference at the servo magnetic head, is optimized at the output of the amplifier 25 as a correction signal for crosstalk interference for that specific disk drive.

The fixed filter is chosen to have a transfer characteristic providing an output signal which is externally correctable to provide a correction signal for any servo head output signal, within the limits of parameter variations of a selected type of disk drive. To this end, the microprocessor 26 implements a particular algorithm, for example the DSD algorithms of the Widrow et al second paper, for processing the demodulated control signal, from the position demodulator 13, to produce the required amplifier control signal at the input of the filter amplifier 25.

The advantage of these crosstalk canceling techniques, methods and apparatuses, is that elaborate shielding techniques are not necessary to shield the servo head 7 from the electromagnetic field of the adjacent data head 5. The surface opposite the dedicated servo surface of the memory disk 2 may now be used to store data without the need for shielding, thereby increasing the disk drive capacity.

Although this invention has been illustrated employing specific well-known electronic components, it will be apparent to those skilled in the art that the invention as to its organizational concept may be practiced with other devices in differing configurations in addition to those taught, for achieving the cancellation, in circuits external to the servo head 7, of unwanted servo head signal interference called crosstalk.

**Claims**

1. A disk memory drive (1), comprising:
   a rotatable memory disk (2) having a data surface and a servo code surface having a servo code magnetic field;
   a motor (4) for rotating said memory disk;
   a data head (5);
   a servo head (7);
   actuator means (10) for movably supporting said data head (5) adjacent said data surface and said servo head (7) adjacent said servo code surface in said servo code magnetic field;
   control means (15) for controlling said actuator means (10);
   data signal means (16) for supplying data signals to said data head (5) for producing electromagnetic fields for recording data on said data surface when said memory disk (2) is rotating, said electromagnetic fields linking said servo head (7); and
   signal correction means (11, 18, 12) for differentially combining correction signals derived from said data signals and servo signals derived from said servo head for producing a control signal, and
   means (13, 14) responsive to said control signal for controlling said control means.

2. The invention according to claim 1 in which:
   said signal correction means (11, 18, 12) comprises a filter (18) responsive to said data signals for producing said correction signals derived from said data signals.

3. The invention according to claim 2 in which said filter (18) is an adaptive filter having a simple adaptive gain term.

4. The invention according to claim 2 in which:
   said filter (18) is an adaptive filter having a transfer characteristic comprising variable parameters.

5. The invention according to claim 2, in which:
   said adaptive filter (18) has a polynomial transfer characteristic.

6. The invention according to claim 2, in which:
   said filter (18) has a discrete signal transfer characteristic.

7. The invention according to claim 2, in which:
   said filter (18) has a continuous signal transfer characteristic.

8. The invention according to claim 5, in which:
   said adaptive filter (18) has a discrete signal polynomial transfer characteristic.

9. The invention according to claim 5, in which:
   said adaptive filter (18) has a continuous signal polynomial transfer characteristic.

10. The invention according to claim 3, in which:
    the transfer characteristic has discrete and continuous state space forms.

11. The invention according to claim 4, comprising:
    means (12a) for controlling at least one of the parameters of said adaptive filter by said control signal, of claim 1.

12. The invention according to claim 4, comprising:
    means (12a) for controlling at least one of the parameters of said adaptive filter as a function of the difference between correction signals at the output of said filter and data signal components of said servo signals derived from said servo head.

13. The invention according to claim 2, in which:
    said filter (18) has a transfer characteristic defined by $K/(s^2 + as + b)$.

14. The invention according to claim 13, further comprising:
    means (12a) responsive to said control signal, of claim 1, for varying at least one of the parameters of the transfer characteristic $K/(s^2 + as + b)$ of said filter.

15. The invention according to claim 1, in which:

said signal correction means comprises a filter (18) responsive to said data signals, and having an output circuit;

an amplifier (25) connected to said output circuit for producing said correction signal;

means (13) for demodulating said control signal; and

a signal processor (26) responsive to the demodulated control signal for controlling said amplifier.

16. A method of compensating for the effect, in the servo signal produced by a servo head (7), of coupling, during data writing, the electromagnetic field of a data head (5) on a data surface of a disk (2) in a disk drive (1) to the servo head (7) on the opposite servo code surface of the disk (2), which method comprises:

coupling a data signal to said data head (7);

operating said disk drive (1) in a data writing, track following mode in which the electromagnetic field of said data head (5) also links said servo head (7); and

subtracting (12) the data signal component from the servo signal produced by said servo head (7).

17. The method of claim 16, in which subtracting said data signal component from said servo signal comprises:

deriving (18) a correction signal from said data signal; and

differentially combining (12) said correction signal with said servo signal to produce a control signal (13, 14).

18. The method of claim 17, further comprising:

controlling (12a) the derivation of said correction signal with said control signal (12).

19. The method of claim 18 in which the step of controlling the derivation of a correction signal comprises:

filtering (18) the data signal to produce said correction signal, and

controlling filtering (12a) of said data signal with said control signal.

20. The method of claim 18 in which the step of controlling the derivation of a correction signal comprises:

filtering (18) the data signal to produce said correction signal,

demodulating (13) said control signal, and

controlling filtering (13a) of said data signal with said demodulated control signal.

21. The method of claim 16, in which the step of subtracting (12) the data signal component from the servo signal comprises:

filtering (18) the data signal;

amplifying (25) the filtered data signal;

subtracting (12) the amplified, filtered data signal from the servo signal to produce a control signal;

demodulating (13) the control signal;

processing (26) the demodulated control signal according to a differential steepest descent algorithm, and

controlling amplification (25) of the filtered data signal with the processed, demodulated control signal according to the DSD algorithm.

FIG.1

FIG.1A

FIG.1B

FIG.1C

EP 0 491 350 A2

FIG. 2

FIG. 3

FIG. 4